# DEMANDE DE BREVET EUROPEEN

(11) **EP 2 833 286 A1**
(43) Date de publication de la demande: **04.02.2015**
(21) Numéro de dépôt: 14178331.6
(22) Date de dépôt: 24.07.2014
(51) Int. Cl.: G06F 21/62, G06F 17/30

(54) **Accessibilité d'éléments d'une interface graphique**

(30) Priorité: 30.07.2013 FR 1357537
(71) Demandeur: Orange, 75015 Paris (FR)
(72) Inventeur: Vincent, Jean-François, 75019 Paris (FR); Derville, Frank, 78000 Versailles (FR)
(74) Mandataire: Cabinet Plasseraud

(57) **Abrégé**

L'invention concerne un traitement de données d'une interface graphique collaborative. Une telle interface comprend plusieurs éléments d'interface et est accessible, au moins en partie, à une pluralité d'utilisateurs (UT1, UT2, UT3). Selon l'invention, l'un au moins des éléments d'interface est accessible à un utilisateur sous réserve de droits d'accès affectés à cet utilisateur et pour cet élément d'interface. Ainsi, l'affichage de l'un au moins des éléments parmi d'autres éléments de l'interface graphique, pour cet utilisateur, est conditionné par les droits affectés à cet utilisateur.

## Description

La présente invention concerne un traitement de données d'interface graphique, notamment pour la création ou la modification d'une telle interface.

Une application possible concerne, à titre d'exemple, l'utilisation d'une interface graphique pour la gestion d'une base de données, par exemple pour la consulter et/ou modifier son contenu, dans le cadre par exemple d'un projet professionnel impliquant un groupe d'utilisateurs. Dans ce cas, certains contenus de la base de données ne sont modifiables que pour une certaine catégorie d'utilisateurs (par exemple des personnes d'un service de ressources humaines). En outre, certains contenus de la base ne peuvent être lus que pour une certaine autre catégorie d'utilisateurs (par exemple des responsables de services). Toutefois, d'autres contenus de la base de données doivent rester accessibles aux autres utilisateurs du groupe et, pour des questions de confidentialité notamment, il n'est pas souhaité que ces autres utilisateurs détectent la présence d'éléments d'interface associés à des contenus auxquels ils n'ont pas accès (par exemple une barre de défilement d'une liste de sélections possibles alors qu'un choix unique est imposé dans l'interface, ou autres).

La présente invention vient améliorer la situation.

Elle propose à cet effet un procédé mis en oeuvre par des moyens informatiques, de traitement de données d'une interface graphique collaborative. En particulier, l'interface comprend une pluralité d'éléments d'interface et elle est accessible, au moins en partie notamment par rapport à ses éléments d'interface comme détaillé ci-après, à une pluralité d'utilisateurs. Ainsi, on entend par « interface collaborative » le fait que chaque utilisateur peut accéder à l'interface et éventuellement la modifier, néanmoins dans certaines conditions détaillées ci-après.

En effet, l'un au moins des éléments d'interface de l'invention est accessible à un utilisateur sous réserve de droits d'accès affectés à cet utilisateur et pour cet élément d'interface. En particulier, un affichage de cet élément parmi d'autres éléments de l'interface graphique, pour cet utilisateur, est conditionné par les droits affectés à cet utilisateur.

Ainsi, par ces dispositions, les utilisateurs n'ayant pas de droit d'accès à un élément de l'interface ne s'aperçoivent pas de l'existence de cet élément, ce qui améliore avantageusement la sécurité des données associées à l'interface. On comprendra ainsi que la présente invention offre un avantage technique d'une sécurité accrue dans l'élaboration et la présentation des interfaces collaboratives.

Dans une forme de réalisation, l'interface est partagée en réseau et elle est destinée à être affichée sur un écran d'un poste informatique (un ordinateur fixe ou portable, une tablette, un smartphone, ou autres), ce poste informatique étant identifié au moins par un identifiant de connexion au réseau précité. Les droits d'accès sont initialement stockés en correspondance de cet identifiant (directement en fonction de l'identifiant de connexion, ou indirectement via par exemple le nom de l'utilisateur ou un identifiant du poste, empruntant cet identifiant de connexion). Les droits d'accès sont alors consultés avant un affichage de l'interface sur l'écran du poste informatique précité, pour effectuer un filtrage des éléments d'interface à ne pas afficher et pour lesquels l'utilisateur de ce poste ne dispose pas de droits d'accès.

Dans un exemple de réalisation, chaque élément d'interface peut comporter un composant d'interface graphique d'un ensemble d'outils graphiques (appelé « WIDGET »). Un utilisateur donné est alors apte à visualiser et/ou interagir avec ce composant si des droits associés lui sont affectés. Ainsi, par exemple, un utilisateur ne voit pas s'afficher un WIDGET correspondant à une barre de défilement d'une liste de sélections possibles, s'il ne dispose pas de droit de visualisation ou de modification de cette liste. Dans cet exemple, une simple rubrique affichant un choix unique qui lui est imposé peut s'afficher dans l'interface.

On comprendra ainsi que l'interface collaborative est avantageusement segmentée en fragments représentés par des éléments d'interface distincts, des droits d'accès étant affectés à des utilisateurs pour chacun de ces éléments.

La fragmentation de l'interface peut avantageusement s'étendre jusqu'à un ou plusieurs fichiers accessibles via l'interface (tableaux, fichiers texte ou image, ou autres). Ainsi, dans un exemple de réalisation, l'un de ces fichiers peut être un tableau accessible via l'interface. Dans ce cas, une partie au moins de l'interface comporte un tableau agencé sous forme matricielle et apte à être segmenté en lignes et/ou colonnes distinctes. Par la mise en ouvre de l'invention, l'accessibilité à chaque ligne et/ou colonne du tableau pour un utilisateur donné peut être définie en fonction des droits de lecture et/ou écriture affectés ou non pour cette ligne et/ou colonne du tableau, et à cet utilisateur donné.

On comprendra ainsi qu'un utilisateur ne disposant pas de droits de lecture de ces lignes et/ou colonnes ne peut donc pas les visualiser (ni, bien entendu *a fortiori,* les modifier).

En outre, des cellules à l'intersection de lignes et de colonnes peuvent faire référence à des données (par exemple des listes de valeurs) qui peuvent elles-mêmes être issues d'autres éléments de l'interface. Dans ce cas, les mêmes restrictions de droits d'accès aux éléments d'interface s'appliquent aussi à ces cellules.

Ainsi, avantageusement, la granularité des droits d'accès à chaque partie de fichier permet, là encore, d'améliorer la confidentialité et la sécurité des données de ce fichier, et ce pour tout type de fichier (tableau, texte, image (type « pdf »), ou autres).

Dans une application avantageuse, l'interface précitée est une interface de gestion d'une base de données (éditable par exemple à l'aide d'un tableur pour générer un tableau du type précité). Plus particulièrement, chaque élément d'interface est associé à une fonctionnalité de lecture/écriture d'un contenu dans la base de données, et, pour chaque utilisateur de l'interface et chaque élément d'interface, on affecte à cet utilisateur des droits pour accéder ou non à la fonctionnalité associée à cet élément d'interface et selon un mode de lecture seule ou selon un mode de lecture et d'écriture.

Avantageusement, une modification par écriture d'un contenu de la base de données par un premier utilisateur habilité provoque un affichage modifié en temps réel de l'interface graphique pour un deuxième utilisateur habilité au moins à lire le contenu modifié.

Avantageusement, la base de données est stockée auprès d'un serveur sous la forme d'un ou plusieurs fichiers partagés, chacun avec un nom de fichier caché. Une telle réalisation accroît encore la sécurité de l'interface collaborative.

En outre, il peut être prévu d'affecter à certains utilisateurs un droit de stocker et de partager des fichiers avec d'autres utilisateurs ayant des droits homologues, et ce de manière sécurisée (via le serveur ou non). Les noms et contenus des fichiers sont avantageusement chiffrés. Les fichiers récupérés par les utilisateurs ayant ce droit sont alors déchiffrés et peuvent être renommés selon les droits affectés. Avantageusement, les fichiers téléchargés par un utilisateur sont toujours conformes aux droits affectés à cet utilisateur.

Dans une réalisation particulière, l'interface graphique étant destinée à être utilisée par un groupe de personnes impliquées dans un projet professionnel commun, l'interface comporte des rubriques correspondant à des objets métiers et, dans une étape préalable d'affectation de droits, on sélectionne des ensembles de règles prédéterminées de présentation des éléments d'interface en fonction des objets métiers précités. Ainsi, les règles prédéterminées peuvent avantageusement imposer l'affectation de droits variables en fonction des personnes du groupe.

Un avantage que procure une telle réalisation consiste en ce que la génération de nouveaux éléments d'interface dépend d'un nombre de règles paramétrables prédéterminées, ce qui offre une plus grande sécurité en termes d'incompatibilité ou de non-conformité de fonctionnement (règles métiers « anti-bugs »).

On comprendra plus généralement que l'un des avantages que procure la présente invention consiste en ce que l'interface collaborative, avec la création progressive de certains de ses éléments, peut évoluer naturellement en fonction d'un groupe grandissant d'utilisateurs habilités à utiliser les éléments créés, sans modifications particulières des autres éléments initiaux de interface.

Un autre avantage que procure la présente invention et qu'il est possible de comparer des versions de l'interface à différents instants de son évolution et de corriger des ajouts qui sont intervenus entre ces différents instants, en particulier si ces ajouts ont généré des erreurs.

Un autre avantage que procure la présente invention consiste en ce que l'interface collaborative peut respecter la norme UML (de l'anglais « Unified Modeling Language »), et ce, pour chacune des versions d'interface.

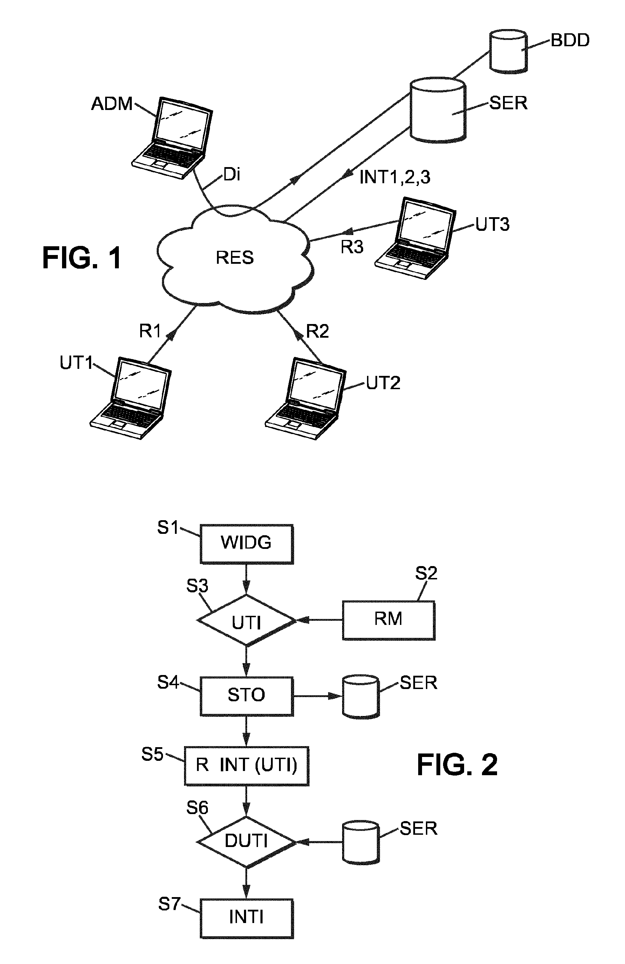

La présente invention vise aussi un programme informatique comportant des instructions pour la mise en ouvre du procédé ci-avant, lorsque ce programme est exécuté par un processeur. Un exemple d'organigramme illustrant l'algorithme général de ce programme est présenté en figure 2 commentée plus loin.

L'invention vise aussi un système de traitement de données d'une interface graphique collaborative, l'interface comprenant une pluralité d'éléments d'interface et étant accessible, au moins en partie, à une pluralité d'utilisateurs. En particulier, le système comporte :
- un dispositif de commande (par exemple un poste informatique d'un administrateur, ou autre) pour affecter à un utilisateur des droits d'accès à l'un au moins des éléments d'interface, cet élément d'interface étant accessible à cet utilisateur sous réserve de droits d'accès affectés à cet utilisateur et pour cet élément d'interface, et
- un dispositif de traitement de l'interface (tel qu'un serveur par exemple) pour piloter un affichage de l'interface (éventuellement sur un poste informatique d'un utilisateur, comme indiqué ci-avant) avec cet élément parmi d'autres éléments de l'interface graphique, pour un utilisateur donné, si cet utilisateur donné dispose de droits affectés pour cet élément.

On a illustré un tel système sur la figure 1 décrite en détails ci-après.

D'ailleurs, d'autres caractéristiques et avantages de l'invention apparaîtront à la lecture de la description détaillée d'exemples de réalisation donnés à titre non illustratif et non limitatif, et à l'examen des dessins annexés sur lesquels :
- la figure 1 illustre un système pour la mise en ouvre de l'invention, selon un exemple de réalisation,
- la figure 2 illustre les principales étapes du procédé au sens de l'invention, selon un exemple de réalisation,
- la figure 3a illustre un exemple d'affectation de droits à un utilisateur pour un élément d'interface,
- la figure 3b illustre un exemple d'affectation de droits à un utilisateur pour accéder à des données via l'interface,
- la figure 3c illustre des exemples de choix possibles d'affectation de droits à un utilisateur,
- la figure 3d illustre un exemple d'application de règles métier pour l'affectation de droits à un utilisateur,
- la figure 4a illustre des exemples d'éléments d'interface apparaissant pour un utilisateur disposant de droit d'accès, rendant ces éléments au moins visibles pour cet utilisateur,
- la figure 4b illustre un exemple dans lequel des éléments d'interface de la figure 4a n'apparaissent pas pour un autre utilisateur ne disposant pas de droit d'accès, ce qui rend ces éléments invisibles pour cet utilisateur.

On se réfère tout d'abord à la figure 1, sur laquelle plusieurs postes informatiques d'utilisateurs UT1, UT2, UT3 sont connectés en réseau RES avec un serveur SER. Dans cet exemple, chaque utilisateur a renseigné auprès du serveur SER un identifiant de connexion au réseau RES pour pouvoir être identifié par le serveur SER, lequel peut alors vérifier les droits d'accès de chaque utilisateur à des données qui, dans l'exemple représenté, sont issues d'une base de données BDD (stockant par exemple un ou plusieurs fichiers, de type tableau de données, ou fichier texte, ou autres). Dans l'exemple décrit, chaque utilisateur formule une requête R1, R2, R3 auprès du serveur SER pour accéder à l'interface collaborative. Par exemple, il peut s'agir d'une forme d'interface accessible via le réseau RES et mise à jour par le serveur SER. En particulier, chaque utilisateur peut visualiser l'interface collaborative sous une forme qui lui est propre INT1, 2, 3, c'est-à-dire en fonction de ses droits d'accès à chaque élément qui compose interface. Dans un exemple de réalisation possible, les droits d'accès de chaque utilisateur DI sont préalablement renseignés via un poste habilité, par exemple le poste informatique d'un administrateur ADM.

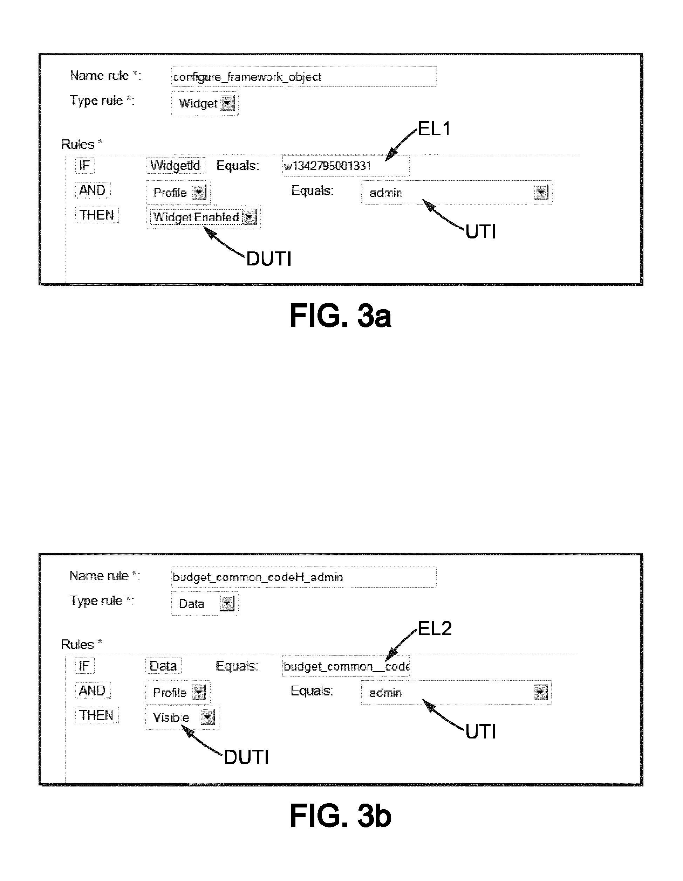

En effet, en référence maintenant à la figure 2, un élément d'interface tel qu'un composant d'interface d'une boîte à outils ou « widget » (un bouton, une barre de défilement, un bandeau de texte, ou autres), ou encore un lien vers une partie de fichier (tableau, texte, image, ou autres), peut être créé à l'étape S1, par exemple par un administrateur de interface. Comme indiqué ci-avant, la génération de droits d'accès à des utilisateurs peut se référer à des règles métiers RM à l'étape S2 (stockées initialement par le serveur SER par exemple). À l'étape S3, l'administrateur vérifie si un utilisateur donné UTI peut disposer de droits d'accès en mode lecture et/ou écriture à des informations liées à ce widget ou à cette partie de fichier, comme on le verra plus loin en référence à la figure 3a. Une fois que l'administrateur a défini les droits d'accès de cet utilisateur UTI à cet élément d'interface, des données relatives à ces droits DUTI sont stockées à l'étape S4, par exemple auprès du serveur SER.

Ensuite, sur réception d'une requête d'interface R1, R2 ou R3 à l'étape S5, venant de l'utilisateur UTI, le serveur SER vérifie si les droits DUTI de l'utilisateur UTI lui permettent d'accéder à chacun des éléments de l'interface demandée, et ce, en mode lecture comme en mode écriture. En particulier, les éléments d'interfaces auxquels l'utilisateur UTI n'a pas accès d'après la consultation de ses droits sont masqués dans la présentation de l'interface collaborative et ainsi, ils ne sont pas affichés dans celle-ci sur le poste informatique de cet utilisateur UTI à l'étape S7. On comprendra ainsi que la version INTI de l'interface collaborative à laquelle un utilisateur UTI peut accéder dépend de ses droits DUTI.

On se réfère maintenant à la figure 3a sur laquelle, pour un élément d'interface EL1 tel qu'un widget, en fonction du profil d'utilisateur UTI qui est ici un administrateur admin, des droits d'accès DUTI sont affectés, typiquement une accessibilité totale à ce widget (« Enabled »). Il apparaît en particulier sur cette figure que les droits d'accès sont définis par une logique booléenne (« IF », « THEN ») entre, d'une part, le type d'éléments d'interface et, d'autre part, le type de profil d'utilisateur.

En référence à la figure 3b, pour un élément d'interface EL2 qui, dans l'exemple représenté, correspond à un lien vers des données d'un fichier de budget, pour un profil d'utilisateur UTI correspondant à l'administrateur admin, les droits affectés DUTI permettent de rendre visibles ces données.

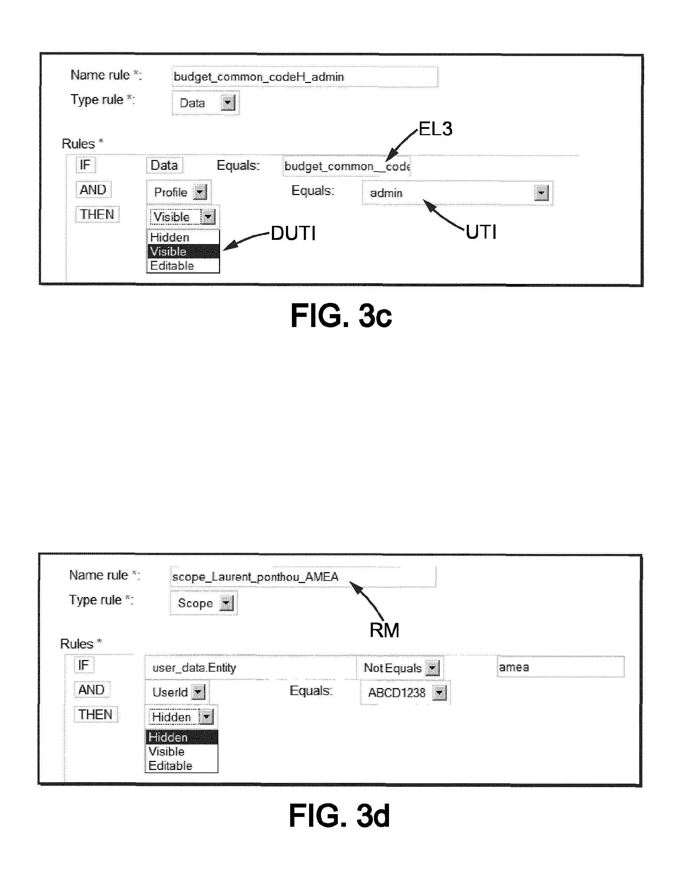

La figure 3c détaille les possibilités de droits d'accès DUTI qui peuvent être affectés et en particulier ces données de budget peuvent être soit cachées, soit visibles (comme dans l'exemple de la figure 3b), soit modifiables.

En référence maintenant à la figure 3d, une règle métier RM permet de prédéfinir les données éditables en relation avec cette règle RM, et ce pour chaque utilisateur (ici identifié par un identifiant UserId). Là encore, ces données peuvent être soit cachées (« Hidden »), soit visibles (« Visible »), soit modifiables (« Editable »).

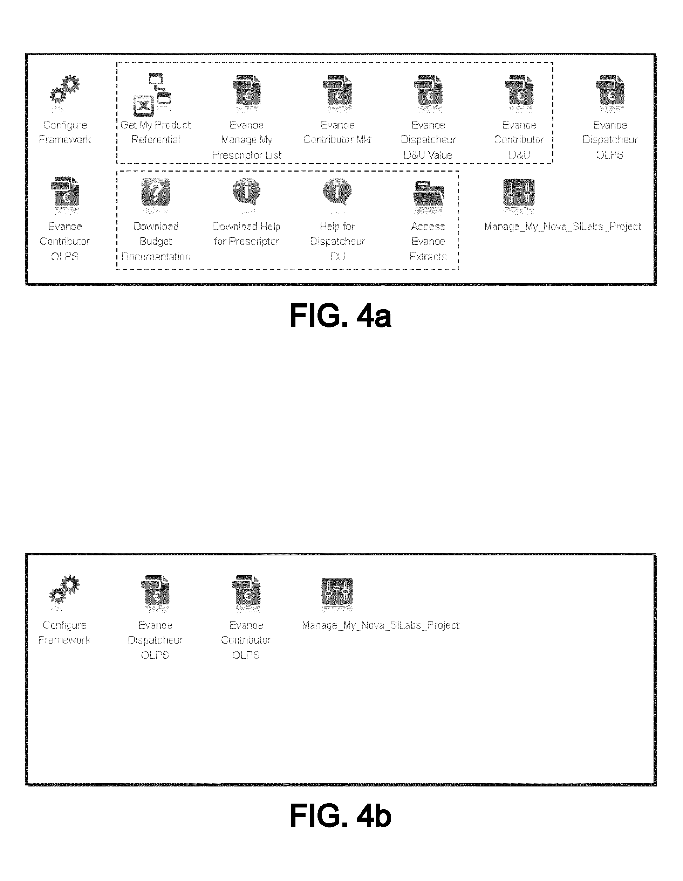

On a représenté sur la figure 4a des exemples d'éléments d'interface apparaissant (mis en évidence par des encadrés en traits pointillés) pour un utilisateur disposant de droit d'accès, rendant ces éléments au moins visibles pour cet utilisateur (donc accessibles, et éventuellement modifiables par cet utilisateur selon ses droits associés). Cette figure 4a est à comparer avec la figure 4b dans laquelle les mêmes éléments d'interface encadrés par des traits pointillés sur la figure 4a n'apparaissent plus pour un autre utilisateur, lequel autre utilisateur ne dispose pas de droit d'accès à ces éléments d'interface, ce qui rend ces éléments invisibles pour cet autre utilisateur.

Bien entendu, la présente invention ne se limite pas à la forme de réalisation présentée ci-avant à titre d'exemple ; elle s'étend à d'autres variantes.

Ainsi, par exemple, l'interface collaborative peut trouver des applications autres que professionnelles, notamment dans le cadre d'un jeu en ligne ou autres (certaines rubriques n'étant pas visibles pour certains joueurs).

## Revendications

1. Procédé mis en oeuvre par des moyens informatiques, de traitement de données d'une interface graphique collaborative, l'interface comprenant une pluralité d'éléments d'interface et étant accessible, au moins en partie, à une pluralité d'utilisateurs (UT1, UT2, UT3),
**caractérisé en ce que** l'un au moins des éléments d'interface est accessible à un utilisateur sous réserve de droits d'accès affectés à cet utilisateur et pour cet élément d'interface, et **en ce qu'**un affichage au moins dudit élément parmi d'autres éléments de l'interface graphique, pour cet utilisateur, est conditionné par les droits affectés à cet utilisateur,
et **en ce que**, l'interface graphique étant destinée à être utilisée par un groupe de personnes impliquées dans un projet commun, l'interface comporte des rubriques correspondant à des objets métiers et, dans une étape préalable d'affectation de droits, on sélectionne des ensembles de règles prédéterminées (RM) de présentation desdits éléments d'interface en fonction desdits objets métiers, les règles prédéterminées imposant l'affectation de droits variables en fonction des personnes dudit groupe.

2. Procédé selon la revendication 1, **caractérisé en ce que** l'interface (INT1,2,3) est partagée en réseau (RES) et destinée à être affichée sur un écran d'un poste informatique (UT1, UT2, UT3) identifié au moins par un identifiant de connexion au réseau, et **en ce que** les droits d'accès sont stockés (STO) en correspondance dudit identifiant et consultés avant un affichage (INTI) de l'interface sur l'écran dudit poste, pour un filtrage (DUTI) des éléments d'interface à ne pas afficher et pour lesquels l'utilisateur dudit poste ne dispose pas de droits d'accès.

3. Procédé selon l'une des revendications précédentes, **caractérisé en ce que**, ladite interface étant une interface de gestion d'une base de données (BDD), chaque élément d'interface est associé à une fonctionnalité de lecture/écriture d'un contenu dans la base de données, et, pour chaque utilisateur de l'interface et chaque élément d'interface, on affecte à cet utilisateur des droits pour accéder ou non à la fonctionnalité associée à cet élément d'interface et selon un mode de lecture seule ou selon un mode de lecture et d'écriture.

4. Procédé selon la revendication 3, **caractérisé en ce qu'**une modification par écriture d'un contenu de la base de données par un premier utilisateur habilité provoque un affichage modifié en temps réel de l'interface graphique pour un deuxième utilisateur habilité au moins à lire ledit contenu modifié.

5. Procédé selon l'une des revendications 3 et 4, **caractérisé en ce que** la base de données est stockée auprès d'un serveur (SER) sous la forme d'un ou plusieurs fichiers partagés, chacun avec un nom de fichier caché.

6. Procédé selon l'une des revendications précédentes, **caractérisé en ce que** chaque élément d'interface comporte un composant d'interface graphique d'un ensemble d'outils graphiques (WIDG), un utilisateur donné (UTI) étant apte à visualiser et/ou interagir avec ledit composant si des droits associés (DUTI) sont affectés à cet utilisateur donné.

7. Procédé selon l'une des revendications précédentes, **caractérisé en ce qu'**une partie au moins de l'interface comporte un tableau agencé sous forme matricielle et apte à être segmenté en lignes et/ou colonnes distinctes, et **en ce que** l'accessibilité à chaque ligne et/ou colonne du tableau pour un utilisateur donné est définie en fonction des droits de lecture et/ou écriture affectés ou non pour cette ligne et/ou colonne du tableau, à cet utilisateur donné.

8. Programme informatique **caractérisé en ce qu'**il comporte des instructions pour la mise en ouvre du procédé selon l'une des revendications 1 à 7, lorsque ce programme est exécuté par un processeur.

9. Système de traitement de données d'une interface graphique collaborative, l'interface comprenant une pluralité d'éléments d'interface et étant accessible, au moins en partie, à une pluralité d'utilisateurs (UT1, UT2, UT3),
**caractérisé en ce qu'**il comporte :
- un dispositif de commande (ADM) pour affecter à un utilisateur des droits d'accès à l'un au moins des éléments d'interface, cet élément d'interface étant accessible à cet utilisateur sous réserve de droits d'accès affectés à cet utilisateur et pour cet élément d'interface, et
un dispositif de traitement de l'interface (SER) pour piloter un affichage de l'interface avec ledit élément parmi d'autres éléments de l'interface graphique, pour un utilisateur donné, si cet utilisateur donné dispose de droits affectés pour cet élément,
et **en ce que**, l'interface graphique étant destinée à être utilisée par un groupe de personnes impliquées dans un projet commun, l'interface comporte des rubriques correspondant à des objets métiers et, dans une étape préalable d'affectation de droits, des ensembles de règles prédéterminées (RM) de présentation desdits éléments d'interface sont sélectionnés en fonction desdits objets métiers, les règles prédéterminées imposant l'affectation de droits variables en fonction des personnes dudit groupe.
